# EUROPEAN PATENT APPLICATION

(11) **EP 1 834 866 A2**
(43) Date of publication of application: **19.09.2007**
(21) Application number: 07005443.2
(22) Date of filing: 16.03.2007
(51) Int. Cl.: B62J 15/02

(54) **Fastening device, particulary for a fork and a supporting rod, for mounting bicycle mudguards**

(30) Priority: 17.03.2006 IT VI20060073
(71) Applicant: Passuello, Ivan, 31020 San Zenone Degli Ezzelini TV (IT)
(72) Inventor: Passuello, Ivan, 31020 San Zenone Degli Ezzelini TV (IT)
(74) Representative: Forattini, Amelia

(57) **Abstract**

A fastening device (1), particularly for a fork and a supporting rod (150), for mounting bicycle mudguards, constituted by a main body (2) which has an elongated receptacle (3), accommodating the supporting rod (150), and a lever-type locking means (5), which is articulated at the elongated receptacle (3) in order to detachably associate the fastening device (1) with the supporting rod (150), the fastening device (1) having an anchoring member which is formed at a first end thereof, in order to detachably associate it with the fork.

## Description

The present invention relates to a fastening device particularly for a fork and a supporting rod, for mounting bicycle mudguards.

It is known that in order to install the supporting rods of mudguards on the eyes joined to the forks or monostays of bicycles proximate to the hubs, various fixing methods are currently used; the simplest are based on the use of through screws, that are inserted in slots formed by bending the supporting rods and are subsequently screwed into the eyes.

This type of mount, which entails the use of screws, is subject to the oxidizing action of atmospheric agents, and has rather long assembly times, which make it scarcely competitive from an economic standpoint.

It should also be noted that in this type of mount there is no possibility to adjust the distance between the mudguard and the eye of forks or monostays, proximate to the hub, and this in some cases becomes a severe limitation.

Other mounting systems are based on the use of rudimentary clips that are constituted by a sort of clamp which is made of molded synthetic material and is formed by two mutually pivoted portions which are capable of simultaneously clamping the supporting rod and the eye, by tightening a screw.

In this case also, assembly is laborious and the time required is rather long; moreover, those clips are highly subject to breakage and their retention is generally very precarious.

The aim of the present invention is to solve the problems described above, by providing a fastening device, particularly for a fork and a supporting rod, which can be detachably engaged simultaneously with a supporting rod and with the eyes of forks or monostays of bicycles without the aid of screws and with particularly short assembly times.

Within the scope of this aim, a particular object of the invention is to provide a fastening device which ensures maximum safety for the user, allowing the optional extraction of the supporting rod only when a preset value of the force is exceeded.

Another object of the invention is to provide a fastening device which allows, proximate to the hub, to adjust the distance between the fender and the eye of forks or monostays.

Another object of the invention is to provide a fastening device which has advantageous production times and costs.

This aim and these and other objects, which will become better apparent hereinafter, are achieved by a fastening device, particularly for a fork and a supporting rod, characterized in that it comprises a main body which has an elongated receptacle, said elongated receptacle accommodating said supporting rod, a lever-type locking means articulated at said elongated receptacle in order to detachably associate said fastening device with said supporting rod, said fastening device further comprising an anchoring member which is formed at a first end thereof, in order to detachably associate said fastening device with said fork.

Further characteristics and advantages of the invention will become better apparent from the following detailed description of preferred but not exclusive embodiments of a fastening device according to the invention, illustrated by way of non-limiting example in the accompanying drawings, wherein:
Figure 1 is a perspective view of a fastening device according to the invention;
Figure 2 is a side view of a fastening device according to the invention in the fixing condition;
Figure 3 is a perspective view of a fastening device according to the invention in the fixing condition;
Figure 4 is another perspective view of a fastening device according to the invention in the fixing condition;
Figure 5 is a side view of a detail of a fastening device according to the invention, in a first step of the completion of the fixing condition;
Figure 6 is a side view of a detail of a fastening device according to the invention in a second step of the completion of the fixing condition;
Figure 7 is a perspective view of a different embodiment of a fastening device according to the invention.

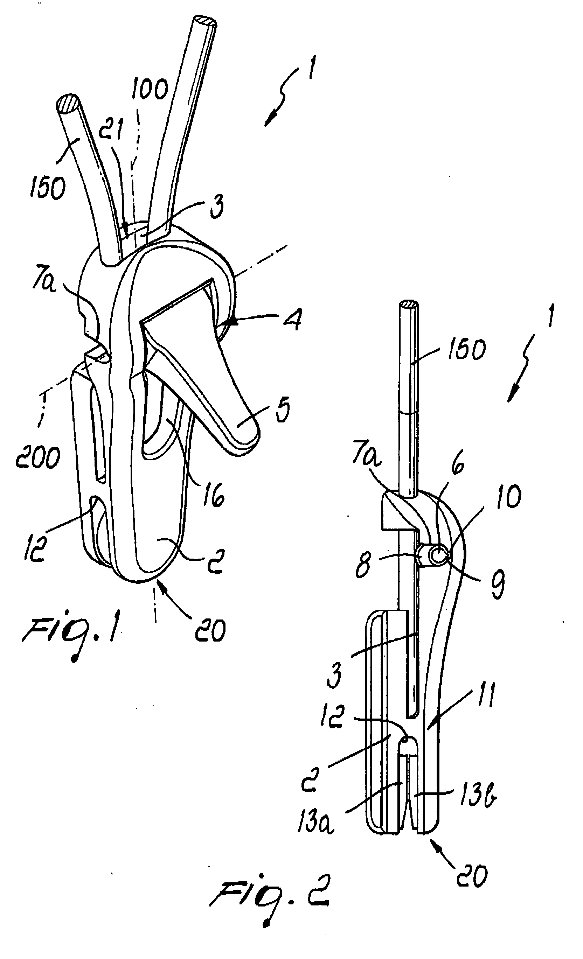

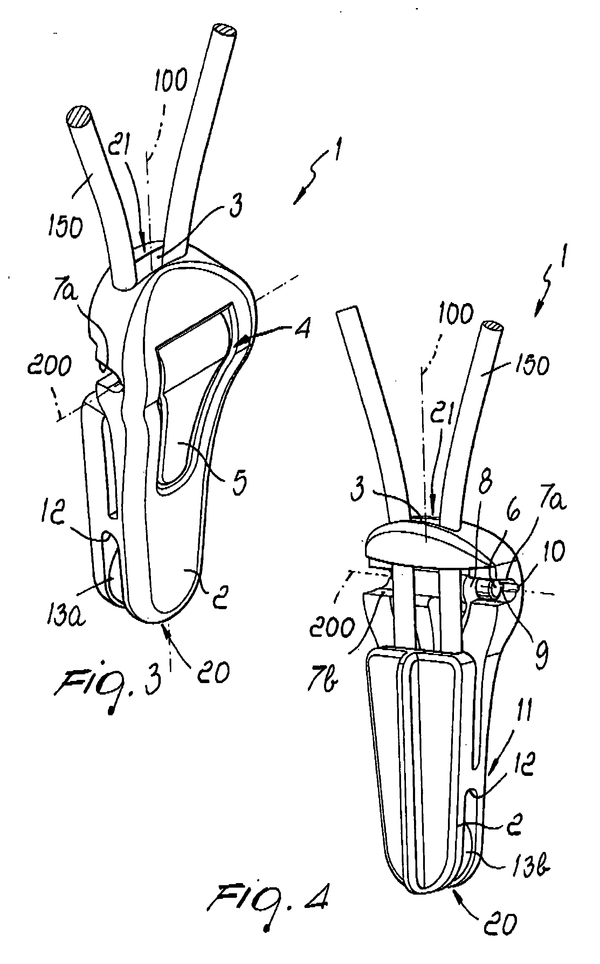

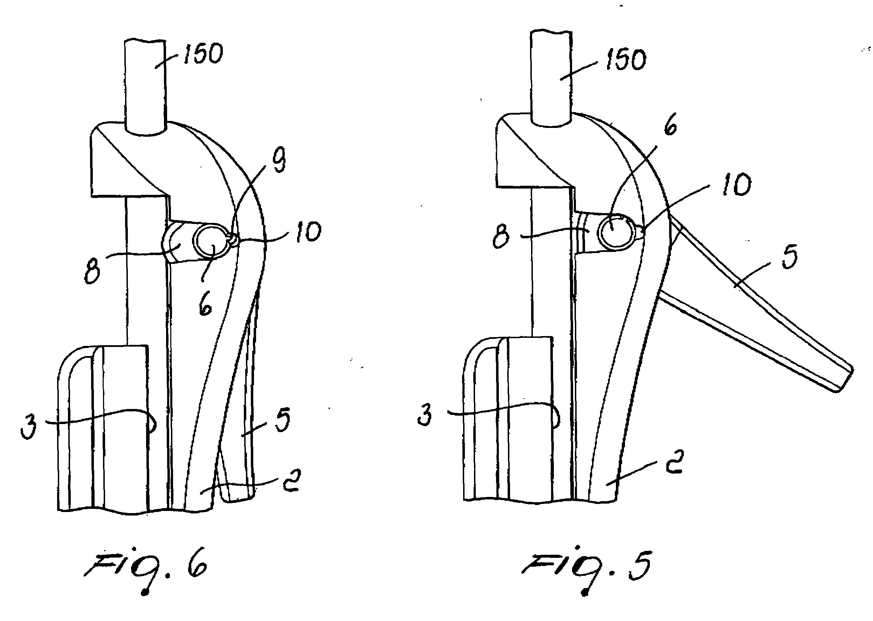

With reference to Figures 1 to 6, a fastening device, generally designated by the reference numeral 1, comprises a main body 2, which has a slender structure and can be made for example of molded synthetic material and inside which there is an elongated receptacle 3 with a longitudinal axis of symmetry 100 and a shape which is substantially complementary to the shape of a supporting rod 150, which during a fixing condition is accommodated within the elongated receptacle 3.

The fastening device 1 has a lever-type locking means 4, namely a lever 5, which is made of molded synthetic material and is articulated to the main body 2, at a second end 21 thereof, with an articulation axis 200 which lies transversely to the longitudinal axis of symmetry 100. The articulation of the lever 5 is provided by a rotation pivot 6, which is formed monolithically at the articulation axis 200 and is accommodated in a pair of cavities 7a and 7b which are formed proximate to the second end 21 of the main body 2 and open toward the inside of the elongated receptacle 3, so as to contrast any pushing action. The lever 5 is provided with a cam-like head 8, which is formed at the axis of rotation 200 and is arranged so that its lug is capable of applying its maximum pushing action to the supporting rod 150 during the fixing condition, in which the lever 5 is substantially parallel to the main body 2 and is accommodated within an appropriately provided slot 16.

The rotation of the lever 5 can be releasably stopped when the lever is in the fixing condition, by a rotation lock means, which acts between the rotation pivot 6 and the pair of cavities 7. The rotation lock means comprises a pawl 9, which is formed on the rotation pivot 6, and a seat 10, which is formed within the cavities 7 and is substantially shaped complementarily to the pawl 9 and in any case so as to engage it with a snap action.

At a first end 20, which lies opposite the second end 21, the fastening device 1 comprises an anchoring member 11, which is formed monolithically in the main body 2 by a recess 12, which is contoured so as to accommodate the eye of a fork and internally has a pair of mutually opposite claws 13a and 13b, which can engage the eye releasably with a snap action in order to join the entire fastening device 1 to the fork.

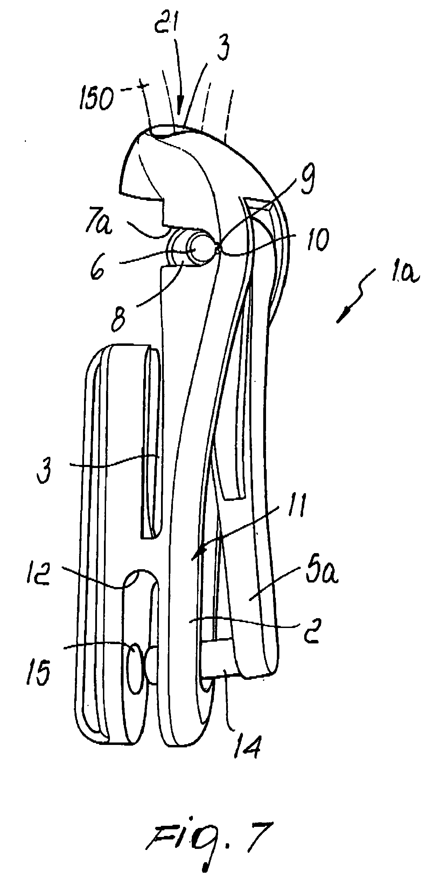

According to a further embodiment of the invention, shown in Figure 7, the fastening device is generally designated by the reference numeral 1 a. The anchoring member 11 has a locking pin 14, which is formed on the lever 5a, at the end that lies opposite the one in which the cam-like head 8 is provided. The locking pin 14, which during the fixing condition blocks the recess 12 and the eye of the fork, may optionally enter a hole 15, which is formed on the main body 2 in order to give greater solidity to the structure.

In the embodiment shown in Figure 7, the parts that correspond to the parts that have already been described with reference to the embodiment shown in Figures 1 to 6 have been designated by the same reference numerals.

The operation of the fastening device according to the invention is as follows.

Taking care to keep the lever 5 transversely to the main body 2, it is sufficient to insert the supporting rod 150 in the elongated receptacle 3, adjusting its insertion depth, which affects the distance between the fender and the eye, and join it detachably to the fastening device 1, subsequently moving the lever 5 into a position which is substantially parallel to the main body 2 and resting it in the slot 16. With the rotation of the lever 5, the lug of the cam-like head 8 applies a pressing action to the supporting rod 150, thus retaining it within the elongated receptacle 3. The rotation also activates the rotation lock means. When the lever 5 is parallel to the main body 2, the pawl 9 in fact enters with a snap action the seat 10 and prevents accidental rotations of the lever 5.

Then, by inserting the eye of the fork in the recess 12 and engaging it by snap action with the mutually opposite claws 13, the fastening device 1 and consequently the supporting rod 150 are joined detachably to the fork.

If one uses the embodiment shown in Figure 7, when the lever 5a lies transversely to the main body 2 it is necessary to insert the supporting rod 150 in the elongated receptacle 3 and also the eye of the fork in the recess 12. Then the lever 5a is rotated and in this case causes the supporting rod 150 to be pressed by the cam-like head 8 and activates the rotation lock means, and also causes the locking pin 14 to affect the recess 12 and the eye of the fork, subsequently entering the hole 15 and joining detachably the fastening device 1a and consequently the supporting rod 150 to the fork.

In practice it has been found that the fastening device particularly for a fork and a supporting rod according to the invention fully achieves the intended aim and objects, since it can engage detachably simultaneously a supporting rod and the eyes of the forks or monostays of bicycles without resorting to screws and with particularly short assembly times, despite ensuring maximum safety for the user.

The fastening device according to the invention has advantageous manufacturing costs and times and allows to adjust the distance between the fender and the eye of forks or monostays proximate to the hub.

This application claims the priority of Italian Patent Application No. VI2006A000073, filed on 17 March 2006, the subject matter of which is incorporated herein by reference.

The fastening device, particularly for a fork and a supporting rod thus conceived is susceptible of numerous modifications and variations, within the scope of the appended claims. All the details may be replaced with other technically equivalent elements.

In practice, the materials employed, so long as they are compatible with the specific use, as well as the contingent shapes and dimensions, may be any according to requirements and to the state of the art.

## Claims

1. A fastening device, particularly for a fork and a supporting rod, **characterized in that** it comprises a main body which has an elongated receptacle, said elongated receptacle accommodating said supporting rod, a lever-type locking means articulated at said elongated receptacle in order to detachably associate said fastening device with said supporting rod, said fastening device further comprising an anchoring member which is formed at a first end thereof, in order to detachably associate said fastening device with said fork.

2. The fastening device according to claim 1, **characterized in that** said lever-type locking means comprises a lever which is articulated to said main body at a second end which lies opposite said first end, said lever having an articulation axis which lies transversely to the longitudinal axis of said elongated receptacle.

3. The fastening device according to one or more of the preceding claims, **characterized in that** said lever comprises a cam-like head, which is formed monolithically with said lever at said articulation axis, said cam-like pushing said supporting rod, during a fixing position, in order to fix detachably said fastening device to said supporting rod.

4. The fastening device according to one or more of the preceding claims, **characterized in that** said lever-type locking means comprises a rotation pivot, which substantially coincides with said rotation axis, and two cavities which are formed in said main body inside said elongated receptacle and proximate to said second end, said cavities being suitable to accommodate said rotation pivot.

5. The fastening device according to one or more of the preceding claims, **characterized in that** said lever locking means comprises a rotation lock means, which acts between said rotation pivot and said pair of cavities.

6. The fastening device according to one or more of the preceding claims, **characterized in that** said rotation lock means comprises at least one lug, which is formed on said rotation pivot, and at least one substantially complementary seat, which is formed inside said cavities, said seat accommodating said lug during said fixing position.

7. The fastening device according to one or more of the preceding claims, **characterized in that** said anchoring member comprises a recess which is formed at said first end and is suitable to accommodate an eye which is joined to said fork.

8. The fastening device according to one or more of the preceding claims,
**characterized in that** said anchoring member comprises a pair of mutually opposite claws, which are formed inside said recess and are detachably associable by snap action with said eye.

9. The fastening device according to one or more of the preceding claims, **characterized in that** said anchoring member comprises a locking pin, which is joined monolithically to said lever on the opposite end with respect to said pivoting axis, said pivot affecting said recess during said fixing position.
